# EUROPEAN PATENT SPECIFICATION

(11) **EP 3 935 962 B1**
(45) Date of publication and mention of the grant of the patent: **24.07.2024**
(21) Application number: 20766840.1
(22) Date of filing: 18.02.2020
(51) Int. Cl.: A23L 33/135, A23K 10/16

(54) **UNDILUTED BACTERIAL CELL DISPERSION AND PRODUCTION METHOD THEREFOR**
UNVERDÜNNTE BAKTERIENZELLDISPERSION UND VERFAHREN ZU IHRER HERSTELLUNG
DISPERSION LIQUIDE DE BACTÉRIES POUR DILUTION, ET PROCÉDÉ DE FABRICATION DE CELLE-CI

(30) Priority: 06.03.2019 JP 2019040237
(43) Date of publication of application: 12.01.2022
(73) Proprietor: Kazami, Daiji, Tochigi 326-0044 (JP)
(72) Inventor: IKEDA, Shinichi, Kuki-shi, Saitama 346-0005 (JP); KOHNO, Kazumi, Kasukabe-shi, Saitama 344-0004 (JP); USHIZAWA, Koji, Inzai-shi, Chiba 270-1341 (JP); HASHIMOTO, Toshirou, Mito-shi, Ibaraki 310-0045 (JP); KAZAMI, Daiji, Ashikaga-shi, Tochigi 326-0044 (JP)
(74) Representative: Ter Meer Steinmeister & Partner
(86) International application number: PCT/JP2020/006303
(87) International publication number: WO 2020/179435

(56) References cited:
- WO-A1-2019/026743
- JP-A- 2007 060 919
- JP-A- 2010 168 309
- JP-A- 2016 518 830
- JP-A- 2019 198 314
- US-A1- 2010 278 975
- US-A1- 2011 008 493
- US-A1- 2016 081 940
- US-A1- 2018 140 647
- US-A1- 2019 029 311

## Description

### Related Application

This application claims the priority of Japanese Patent Application No. 2019-040237 filed on March 6, 2019.

### Technical Field

The present invention relates to a production method for producing an undiluted microbial cell dispersion, particularly to a production method for producing an undiluted microbial cell dispersion that suppresses separation and/or sedimentation in the diluted dispersion.

### Background Art

When microbial cells are ingested by mammals including humans, birds, fishes, and crustaceans, excellent effects such as not only supply of nutrients but also improvement of immunity are exhibited; in particular, dead microbial cells have a small risk when ingested, and thus have been blended into various foods, beverages, etc.

In particular, it is known that administering microbial cells to livestock increases disease resistance depending on improvement of immunity. It is also possible to add a concentrated microbial cell dispersion to drinking water for livestock in farms, and this is more convenient in terms of cost and workability compared to adding and mixing microbial cell powder to feed.

### Citation List

### Patent Literature

Patent Literature 1: Japanese Unexamined Patent Publication No. 2008-259502 A
Patent Literature 2: Japanese Unexamined Patent Publication No. 2014-19 A
US 2016/081940A1 relates to heat processes health food products, which are particularly liquid-based products comprising a probiotic component capable of resisting heat and humidity. US 2011/008493 A1 relates to granules for incorporating bacteria into health food products. These granules contain a core of bacteria to be released in a viable state in the small intestine, wherein said granules are coated with layers protecting the bacteria against high temperature and adverse conditions along the gastrointestinal tract.
US2010/278975 A1 relates to a method for preparing lactic acid bacteria triple-coated with protein, polysaccharide and nanoparticles.

### Summary of Invention

### Technical Problem

However, when microbial cells are added to drinking water, microbial cells will readily sediment, and it may lead to ingestion in a non-uniform manner or clogging of pipes and/or water inlets. Although there has been a technique as a countermeasure in which the sedimentation is suppressed by thickening or gelation by blending a polysaccharide or the like thereinto (Patent Literature 1 and Patent Literature 2). In the case of diluting and adding the microbial cells to drinking water, it is necessary to add a concentrated microbial cell dispersion to a large amount of drinking water to re-disperse, and furthermore, the re-dispersed state in the drinking water needs to be maintained for a long period of time. Therefore, although it is conceivable to continuously stir the drinking water added with microbial cells or add the microbial cells at the time of use, it requires a stirrer, a pump for carrying the diluted microbial cells to the water inlet, and management of a drinking water pipe of several tens of meters is costly and impractical.

### Solution to Problem

The present invention has been made in view of the problem of the prior art, and an object is to provide an undiluted microbial cell dispersion that allows the microbial cells added and dispersed into drinking water to suspend in the water for an extended period of time, and a production method therefor.

Described herein is an undiluted microbial cell dispersion comprising: aqueous gel- or thickener-coated microbial cells coated with an aqueous gelling or thickening polysaccharide; and an aqueous medium in which the gel- or thickener-coated microbial cells are densely dispersed.

The aqueous gelling or thickening polysaccharide in the dispersion is selected from the group consisting of agar, xanthan gum, pectin, guar gum, carrageenan, gellan gum, The microbial cells are preferably lactic acid bacteria, bifidobacteria, Bacillus subtilis, butyric acid bacteria, yeast, or the like, and it may be live microbial cells or dead microbial cells.

In the present invention, a method for producing an undiluted microbial cell dispersion in the case of using dead microbial cells or thermoduric microbial cells (thermoduric spores) comprises:
a primary disintegrating step of disintegrating aggregates of dead microbial cells or thermoduric microbial cells (thermoduric spores) into individual microbial cells in an aqueous medium by a mechanical disintegrating force;
a dissolution step of heating and stirring a polysaccharide-microbial cell dispersion that is obtained by dispersing an aqueous gelling or thickening polysaccharide in the microbial cell dispersion to a temperature equal to or higher than a dissolution temperature of the polysaccharide;
a cooling step of cooling the polysaccharide-microbial cell dispersion to a temperature equal to or lower than an aqueous gelling or thickening temperature;
a secondary disintegrating step of re-disintegrating the cooled polysaccharide-microbial cell dispersion by a mechanical disintegrating force; and
a filling step of reheating the secondarily disintegrated polysaccharide-microbial cell dispersion to a temperature before the aqueous gelling or thickening polysaccharide is redissolved, and filling the polysaccharide-microbial cell dispersion to a container, wherein the gelling or thickening polysaccharide is selected from the group consisting of agar, carrageenan, gellan gum, pectin, xanthan gum and guar gum. The container can be stored at ambient temperature.

In the present invention, a method for producing an undiluted microbial cell dispersion in the case of using live microbial cells comprises:
a primary disintegrating step of disintegrating aggregates of live microbial cells into individual microbial cells in an aqueous medium by a mechanical disintegrating force;
a dissolution step of heating and stirring a solution obtained by dispersing an aqueous gelling or thickening polysaccharide in an aqueous medium to a temperature equal to or higher than a dissolution temperature;
a cooling step of cooling the polysaccharide solution to a temperature before an aqueous gelling or thickening temperature;
a secondary disintegrating step of mixing the primarily disintegrated microbial cell dispersion and the cooled polysaccharide solution without heating, and re-disintegrating by a mechanical disintegrating force; and
a filling step of filling the secondarily disintegrated polysaccharide-microbial cell dispersion to a container at a temperature of 30°C or lower without reheating, wherein the gelling or thickening polysaccharide is selected from the group consisting of agar, carrageenan, gellan gum, pectin, xanthan gum and guar gum. Since it contains live bacteria, the container is desirably refrigerated.

In the method using either the dead microbial cells or the live microbial cells, when agar is used, the aqueous gel dissolution temperature is preferably 90°C or higher, and the aqueous gelling temperature is preferably 30°C or lower.

A specific configuration of the present invention is described below.

In the present invention, the microbial cells are preferably lactic acid bacteria, bifidobacteria, Bacillus subtilis, butyric acid bacteria, yeast, or the like, regardless of whether they are live microbial cells or dead microbial cells.

A microbial cell concentration in the undiluted microbial cell dispersion is preferably from 0.01 to 1.0% by mass, and the undiluted microbial cell dispersion may be diluted 100 to 1,000,000 times with an aqueous medium to give drinking water having a microbial cell concentration of from 0.01 to 10.0 ppm, and may be further sprayed on feed or the like.

In the present invention, the aqueous gelling or thickening polysaccharide is a polysaccharide that forms an aqueous gel or a thickener by heating, dissolving and cooling, selected from the group consisting of agar, xanthan gum, pectin, guar gum, carrageenan and gellan gum. Agar is particularly preferred because it has a large difference between its aqueous gel dissolution temperature and its aqueous gelling temperature.

The concentration of the aqueous gelling or thickening polysaccharide in the undiluted microbial cell dispersion is from 0.01 to 1% by mass, preferably from 0.05 to 0.5% by mass. When agar is used, the gelation concentration by the agar in the entire aqueous medium is about 1% by mass or greater. However, it is not necessary to gel the entire aqueous medium in the present invention, and even with a gelation concentration of from 0.05 to 0.5% by mass, the microbial cells can be coated with the aqueous gel.

In the method for producing the undiluted microbial cell dispersion according to the present invention, since agar, which is particularly preferably used, dissolves at about 90°C and gels when cooled to about 30°C, loose gel bonds between individual particles are broken by the secondary mixer disintegration. Then, it is reheated to 70°C in order to improve storage stability, and is filled to a container. If it is reheated to 80 to 90°C, the agar filled into the container may gel again when cooled, and the gel between individual particles is likely to bond again and sediment; therefore, it is not preferred. Thus, in agar that is used particularly preferably, the heating temperature range (70°C) when it is filled into the container for storage corresponds to the upper limit temperature range in which the gel does not dissolve or gel again.

In the disintegrating step of the present invention, the agitating speed of disintegrating blades is preferably 1,000 rpm or greater, and this is much faster than the agitating speed in typical mixing (several tens to several hundreds rpm). When the agitating speed is 1,000 rpm or less, disintegration may not be sufficient, and the effect of preventing sedimentation of microbial cell in diluted drinking water may not be satisfactory.

Examples of other additives in the present invention include citric acid, malic acid, adipic acid, ascorbic acid, succinic acid, fermented vinegar, acetic acid, and lactic acid. When a dead microbial cell dispersion is filled into a container at 70°C and stored at ambient temperature, the pH of the dispersion is preferably adjusted to pH 4.6 or lower. Since a live microbial cell dispersion cannot be filled into a container at a temperature of 70°C and is filled at ambient temperature, it is desirably stored in a refrigerator.

In addition, the microbial cell dispersion as described herein can be used for a mixed feed or drinking water for livestock, and can be provided as a health drink for human body.

### Advantageous Effects of Invention

According to the present invention, by coating microbial cells such as dead microbial cells or live microbial cells with the aqueous gelling or thickening polysaccharide, dispersibility in an aqueous medium can be improved.

### Brief Description of Drawings

Figure 1 is photomicrographs of bacterial cell dispersions 1-1 and 1-8 of Test Example 4.
Figure 2 depicts a change in IgG concentration between with and without addition of lactic acid bacteria during raising of pigs in Test Example 5.
Figure 3 depicts a change in IgA concentration between with and without addition of lactic acid bacteria during raising of pigs in Test Example 5.

### Description of Embodiments

Preferred embodiments of the present invention are described below. The contents in the following embodiments are expressed in "percent by mass".

The present inventors prepared undiluted bacterial cell dispersions shown in Tables 1 and 4, and performed a sedimentation test thereon.

### [Test Example 1]

Using a plurality of aqueous gelling or thickening polysaccharides, a primary mixer disintegration was performed in all cases, and then a bacterial cell sedimentation test was performed with or without a secondary mixer disintegration.

In the primary mixer disintegration, 0.2% of dead lactic acid bacteria HS-1 cell powder (Lactobacillus sakei HS-1) was dispersed in water and disintegrated with a mixer at 3,000 rpm for 2 minutes in order to finely separate aggregates of lactic acid bacteria cells into individual cells.

Aqueous gelling or thickening polysaccharide and citric acid were added to the bacterial cell dispersion to be heated and cooled. Gelatin (a collection/mixture of peptides and proteins) is not according to the invention (Comparative Example). Then, the bacterial cell dispersion was heated as it was (without the secondary mixer disintegration) or after being disintegrated again with the mixer at 3,000 rpm for 2 minutes (secondary mixer disintegration), and 100 g was filled into a container at 70°C.

### Formulations of lactic acid bacteria dispersions (lactic acid bacteria 0.2%)

**[Table 1]**

| | Agar | Carrage enan | Gelatin | Gellan Gum | Pectin | Xanthan Gum | Guar Gum |
|---|---|---|---|---|---|---|---|
| Lactic acid bacteria HS-1 dead cell bulk powder | 0.2 | 0.2 | 0.2 | 0.2 | 0.2 | 0.2 | 0.2 |
| Polysaccharides | 0.1 | 0.1 | 0.1 | 0.1 | 0.1 | 0.1 | 0.1 |
| Citric Acid | 0.1 | 0.1 | 0.1 | 0.1 | 0.1 | 0.1 | 0.1 |
| Water | 99.6 | 99.6 | 99.6 | 99.6 | 99.6 | 99.6 | 99.6 |
| Total | 100 | 100 | 100 | 100 | 100 | 100 | 100 |

The sedimentation test was performed as follows.

The container was lightly shaken and then allowed to stand still at room temperature to visually observe the sedimentation state of bacterial cells. In the lactic acid bacteria dispersion (lactic acid bacteria 0.2%), no sedimentation was observed after four days in the gellan gum case. In the gelatin case, sedimentation occurred in one hour in the case without the secondary disintegration, and in three hours in the case with the secondary disintegration. In the other cases, sedimentation by about half was observed after two days. The results are shown in Table 2.

### Sedimentation confirmation test on lactic acid bacteria dispersions (lactic acid bacteria 0.2%)

**[Table 2]**

| | Agar | | Carrageen an | | Gelatin | | Gellan Gum | | Pectin | | Xanthan Gum | | Guar Gum | |
|---|---|---|---|---|---|---|---|---|---|---|---|---|---|---|
| With/without Secondary disintegration | - | + | - | + | - | + | - | + | - | + | - | + | - | + |
| Day 1 | ○ | ○ | ○ | ○ | × | × | ○ | ○ | ○ | ○ | ○ | ○ | ○ | ○ |
| Day 2 | △ | △ | △ | △ | × | × | ○ | ○ | △ | △ | △ | △ | △ | △ |
| Day 3 | △ | △ | △ | △ | × | × | ○ | ○ | △ | △ | △ | △ | △ | △ |
| Day 4 | △ | △ | △ | △ | × | × | ○ | ○ | △ | △ | × | × | △ | △ |
| Day 5 | △ | △ | △ | △ | × | × | ○ | ○ | △ | △ | × | × | △ | △ |

| | | | | | | | | | | | | | | |
|---|---|---|---|---|---|---|---|---|---|---|---|---|---|---|
| O: Bacterial cells suspended, △: About half of bacterial cells sedimented, ×: All bacterial cells sedimented | | | | | | | | | | | | | | |

### [Test Example 2]

0.5% (2.5 g) of the lactic acid bacteria dispersion (lactic acid bacteria 0.2%) of Table 1 was added to 500 ml of water in a transparent glass cylinder. After stirring well, it was allowed to stand still (lactic acid bacteria 0.001%). Light was irradiated to the cylinder with a penlight in a dark room to determine, with visual observation, the suspension state of the bacterial cells by irregular reflection of light at the side part and the sedimentation state of the bacterial cells at the bottom part. The results are shown in Table 3.

It was found that the bacterial cells and suspended in water without sedimentation for three days in the agar case performed with the secondary disintegration, and for two days in the carrageenan case, gellan gum case, pectin case, xanthan gum case, and guar gum case.

### Sedimentation confirmation test on lactic acid bacteria dispersions (lactic acid bacteria 0.001%)

**[Table 3]**

| | Agar | | Carrageen an | | Gelatin | | Gellan Gum | | Pectin | | Xanthan Gum | | Guar Gum | |
|---|---|---|---|---|---|---|---|---|---|---|---|---|---|---|
| With/without Secondary disintegration | - | + | - | + | - | + | - | + | - | + | - | + | - | + |
| Day 1 | ○ | ○ | ○ | ○ | × | × | ○ | ○ | ○ | ○ | ○ | ○ | ○ | ○ |
| Day 2 | △ | ○ | △ | ○ | × | × | △ | ○ | △ | ○ | △ | ○ | △ | ○ |
| Day 3 | △ | ○ | × | △ | × | × | △ | △ | × | △ | × | △ | × | △ |
| Day 4 | × | △ | × | × | × | × | × | × | × | × | × | × | × | × |
| Day 5 | × | × | × | × | × | × | × | × | × | × | × | × | × | × |

| | | | | | | | | | | | | | | |
|---|---|---|---|---|---|---|---|---|---|---|---|---|---|---|
| O: Bacterial cells suspended, △: About half of bacterial cells sedimented, ×: All bacterial cells sedimented | | | | | | | | | | | | | | |

### [Test Example 3]

The following test was further carried out for the agar case that was most effective in preventing sedimentation in Test Example 2. The production method of each test example was as follows. Formulations are shown in Table 4.

Among 1-1 to 1-8, in 1-5, 1-6, 1-7, and 1-8, only dead lactic acid bacteria HS-1 powder and water were disintegrated with a mixer at 3,000 rpm for 2 minutes before heating to separate aggregates of lactic acid bacteria cells into individual cells (primary mixer disintegration). 1-1, 1-2, 1-3, and 1-4 were not subjected to the primary mixer disintegration and used as they were.

Next, irrespective of whether agar was added or not, mixing, stirring, and heating at 90°C (agar dissolution temperature) for 10 minutes, followed by cooling to 30°C (agar gelling temperature) were performed in all cases. Agar was added in 1-3, 1-4, 1-7, and 1-8. Agar was not added in 1-1, 1-2, 1-5, and 1-6.

Then, citric acid was added to all cases.

1-1, 1-3, 1-5, and 1-7 were then heated to 70°C, and filled into a container at this temperature. 1-2, 1-4, 1-6, and 1-8 were disintegrated with a mixer at 3,000 rpm for 2 minutes (secondary mixer disintegration), subsequently heated to 70°C in the same manner, and filled 100 g thereof into a container at this temperature.

The sedimentation test on the lactic acid bacteria dispersion (lactic acid bacteria 0.2%) was performed as follows.

The lactic acid bacteria dispersion containers of 1-1 to 1-8 were lightly shaken, and 0.5% (2.5 g) thereof was added to 500 ml of water in a transparent glass cylinder. After stirring well, it was allowed to stand still (lactic acid bacteria 0.001%). Light was irradiated to the cylinder with a penlight in a dark room to determine, with visual observation, the suspension state of the bacterial cells by irregular reflection of light at the side part and the sedimentation state of the bacterial cells at the bottom part. The results are shown in Table 5.

Among the cases using agar, it was found that bacterial cells suspended in water without sedimentation for three days in 1-8, to which the primary disintegration and the secondary disintegration were performed, for two days in 1-4, to which only the secondary disintegration was performed, and for one day in 1-7, to which only the primary disintegration was performed. From the above, it was found that addition of agar with only the secondary disintegration is better than with only the primary mixer disintegration, and, in particular, sedimentation can be prevented for a long time by further combining the primary and secondary disintegration.

In the highly-concentrated lactic acid bacteria solution (stock solution, lactic acid bacteria 0.2%) filled in the container, there is no problem with sedimentation itself of bacterial cells in a short time; however, it is important that after lightly shaking the container, and adding and mixing 0.5% (200 times diluted) stock solution in a dilution tank for drinking water, the bacterial cell components are suspended without sedimentation in the drinking water for a long time without stirring and mixing, and the test example thereof is 1-8.

### Formulations of lactic acid bacteria dispersions (0.2%)

**[Table 4]**

| Test example | 1-1 | 1-2 | 1-3 | 1-4 | 1-5 | 1-6 | 1-7 | 1-8 |
|---|---|---|---|---|---|---|---|---|
| HS-1 (dead bacterial powder) | 0.2 | 0.2 | 0.2 | 0.2 | 0.2 | 0.2 | 0.2 | 0.2 |
| Agar | - | - | 0.1 | 0.1 | - | - | 0.1 | 0.1 |
| Citric acid | 0.1 | 0.1 | 0.1 | 0.1 | 0.1 | 0.1 | 0.1 | 0.1 |
| Water | 99.7 | 99.7 | 99.6 | 99.6 | 99.7 | 99.7 | 99.6 | 99.6 |
| Mixer primary disintegration (before heating) | - | - | - | - | - | + | + | + |
| Mixer secondary disintegration (after heating) | - | + | - | + | - | + | - | + |

### Sedimentation confirmation test on lactic acid bacteria dispersions (lactic acid bacteria 0.001%)

**[Table 5]**

| | 1-1 | 1-2 | 1-3 | 1-4 | 1-5 | 1-6 | 1-7 | 1-8 |
|---|---|---|---|---|---|---|---|---|
| Day 1 | × | × | Δ | ○ | × | Δ | ○ | ○ |
| Day 2 | × | × | × | ○ | × | × | Δ | ○ |
| Day 3 | × | × | × | △ | × | × | Δ | ○ |
| Day 4 | × | × | × | × | × | × | × | Δ |
| Day 5 | × | × | × | × | × | × | × | × |

| | | | | | | | | |
|---|---|---|---|---|---|---|---|---|
| O: Bacterial cells suspended, △: About half of bacterial cells sedimented, ×: All bacterial cells sedimented | | | | | | | | |

### [Test Example 4]

The present inventors further studied the relationship between the average particle size of the bacterial cells and the aggregation or dispersion state of the bacterial cells.

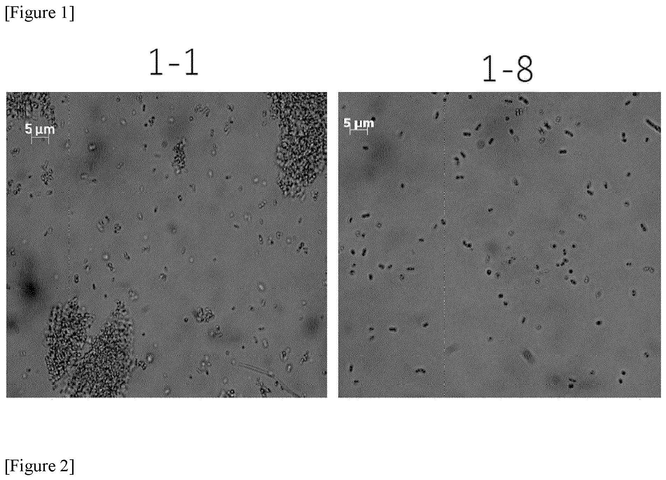

The average particle size for each of the above working examples 1-1 to 1-8 was measured with a confocal laser scanning microscope (ZEISS LSM510). The results of 1-1 and 1-8 are shown in Figure 1.

As a result of observation with the microscope, in 1-1 and 1-3, to which neither the primary nor secondary mixer disintegration was performed, many dead bacterial cell aggregates with an average particle size of about 4.1 µm were observed (photograph 1-1). Whereas, in 1-2, 1-4, 1-5, 1-6, 1-7, and 1-8, to which the primary mixer disintegration or secondary disintegration was performed, many individual dead bacterial cells with a size of 1.8 to 2.0 µm were observed (photograph 1-8).

From the above, it is presumed that suppression of the sedimentation rate according to the present invention is not achieved simply by micronizing the dispersed particles of the bacterial cells or increasing the viscosity with agar; but, as in Test Example 1-8 particularly, the gels on the surfaces of individual particles of dead bacterial cells that were weakly bonded in the production process were separated from each other by the secondary mixer disintegration, and the gel that coats the individual particles enabled the individual particles to suspend easily.

### [Test Example 5]

By using the embodiment 1-8 of Test Example 3, the bacterial cells can be ingested uniformly with a simple drinking water distribution facility utilizing a water pressure difference without using power such as a stirrer or a pump. For example, a container containing 100 g of lactic acid bacterial cell dispersion (Test Example 3, 1-8, lactic acid bacteria 0.2%) is lightly shaken. Then, the dispersion is added to a 20L tank employing DOSATRON^{®} (dosing blender manufactured by Iwatani Corporation), and is firstly stirred and mixed only. It is sucked in a state of the bacterial cell dispersion (lactic acid bacteria 0.02 ppm) further diluted 500 times from the dosing blender (lactic acid bacteria 0.001%). Then, it is uniformly added, diluted and mixed to drinking water, and is sent to the water inlet, so that the livestock can ingest the bacterial cells at a constant concentration upon drinking water.

On the above conditions, field tests were conducted at pig farms in Japan from autumn 2018 to 2019.

In both of a test group in which 100 g of the lactic acid bacteria cell dispersion (lactic acid bacteria 0.2%) was added to DOSATRON 20L and a control group without such addition, each group contained 10 pigs, and the pigs were bred with the same feed from 21 days old to 150 days old immediately after weaning. Drinking water was provided freely.

Regarding the concentration of the lactic acid bacteria, lactic acid bacteria HS-1 (dead bacterial cell powder) at the same concentration (0.02 ppm), which was effective in increasing body weight and/or suppressing diarrhea when added to pig feed, were added to the drinking water of the test group, on the basis of a paper written by Osamu Shitara of Hyogo Prefectural Livestock Center. Hyogo Prefectural Technology Center for Agriculture, Forestry and Fisheries (Livestock), Bull.Hyogo.Pre.Tech.Cent.Agri.Forest.Fish. (Animal Husbandry) 48,17-22 (2012)

### [Paper]

The serum IgG and IgA of pigs of 21 days old, 50 days old, 70 days old, 90 days old, and 150 days old in both groups were measured.

### 1. Reagent kit used

Pig IgG ELISA Kit (Cat. No. E101-102) Bethyl Laboratories, Inc. was used for IgG measurement. Pig IgA ELISA Kit (Cat. No. E101-104) Bethyl Laboratories, Inc. was used for IgA measurement.

### 2. Measurement sample

Plasma samples collected from 21 days old, 50 days old, 70 days old, 90 days old, and 150 days old pigs (test groups) that were bred with the lactic acid bacteria dead cell dispersion containing HS-1 dead bacterial cells were diluted using the diluent attached to the reagent kit to a multiple required for measurement, and measured as a test sample. IgG was diluted 500,000 times and IgA was diluted 30,000 times. As the control group, 21 days old, 50 days old, 70 days old, 90 days old, and 150 days old pigs that were bred with drinking water free from HS-1 dead bacterial cells were measured in the same manner as described above. As for the plasma, plasma specimens n = 6 were picked up from different pigs n = 10 for each age in day by excluding hemolytic specimens and used for measurement.

### 3. Measurement device

In ELISA kits, multi-detection mode microplate reader Infinite 200 PRO was used for measurement. The measurement wavelength for absorbance was 450 nm. A polynomial approximate expression (a quartic equation in either case) of the dilution approximate curve was selected as the calibration curve based on the serial antigen concentrations and their absorbances for each of IgG and IgA, and the order in which the correlation r2 was close to 1 was determined.

### 4. Measurement result

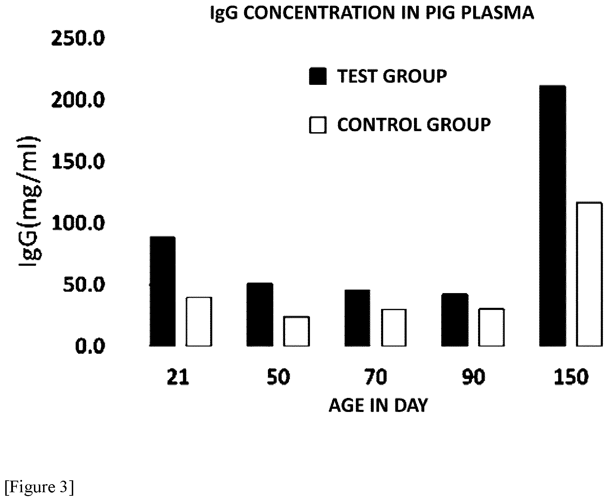

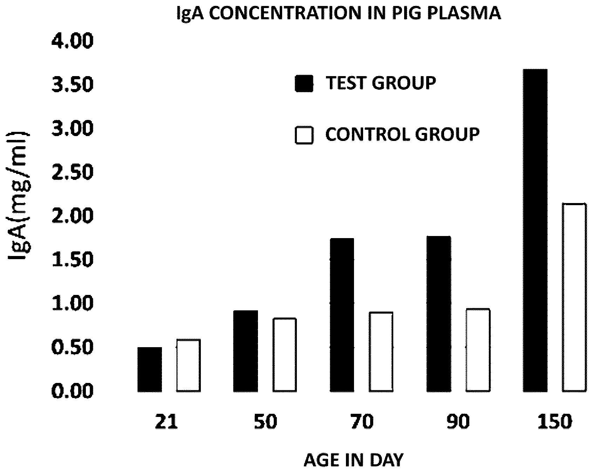

The IgG measurement result is shown in Figure 2, and the IgA measurement result is shown in Figure 3.

IgG and IgA of the plasma specimens of the 21 days old, 50 days old, 70 days old, 90 days old, and 150 days old were measured, and the IgG value (mg/ml) in the plasma remained at approximately the same level on day 50, day 70, and day 90, and then increased significantly on day 150.

On the other hand, the IgA value (mg/ml) showed a gradual increasing tendency from day 21, and a large increase was observed on day 150.

In the measurement results of both IgG and IgA, concentrations were higher in the test group than in the control group at all ages in day.

## Claims

1. A method for producing an undiluted microbial cell dispersion comprising:
a primary disintegrating step of disintegrating aggregates of dead microbial cells or thermoduric microbial cells (thermoduric spores) into individual microbial cells in an aqueous medium by a mechanical disintegrating force;
a dissolution step of heating and stirring a polysaccharide-microbial cell dispersion that is obtained by dispersing an aqueous gelling or thickening polysaccharide in the microbial cell dispersion to a temperature equal to or higher than a dissolution temperature of the polysaccharide;
a cooling step of cooling the polysaccharide-microbial cell dispersion to a temperature equal to or lower than an aqueous gelling or thickening temperature;
a secondary disintegrating step of re-disintegrating the cooled polysaccharide-microbial cell dispersion by a mechanical disintegrating force; and
a filling step of reheating the secondarily disintegrated polysaccharide-microbial cell dispersion to a temperature before the aqueous gelling or thickening polysaccharide is redissolved and filling the polysaccharide-microbial cell dispersion to a container,
wherein the gelling or thickening polysaccharide is selected from the group consisting of agar, carrageenan, gellan gum, pectin, xanthan gum and guar gum.

2. A method for producing an undiluted microbial cell dispersion comprising:
a primary disintegrating step of disintegrating aggregates of live microbial cells into individual microbial cells in an aqueous medium by a mechanical disintegrating force;
a dissolution step of heating and stirring a solution that is obtained by dispersing an aqueous gelling or thickening polysaccharide in an aqueous medium to a temperature equal to or higher than a dissolution temperature;
a cooling step of cooling the polysaccharide solution to a temperature before an aqueous gelling or thickening temperature;
a secondary disintegrating step of mixing the primarily disintegrated microbial cell dispersion and the cooled polysaccharide solution without heating, and re-disintegrating by a mechanical disintegrating force; and
a filling step of filling the secondarily disintegrated polysaccharide-microbial cell dispersion to a container at a temperature of 30°C or lower without reheating,
wherein the gelling or thickening polysaccharide is selected from the group consisting of agar, carrageenan, gellan gum, pectin, xanthan gum and guar gum.

3. The method for producing an undiluted microbial cell dispersion according to claim 1 or 2, wherein the aqueous gelling polysaccharide is agar, and is added to the microbial cell dispersion at a concentration ranging from 0.05 to 0.5% by mass.

4. The method for producing an undiluted microbial cell dispersion according to claim 3, wherein an aqueous gel dissolution temperature is 90°C or higher and an aqueous gelling temperature is 30°C or lower.

## Patentansprüche

1. Verfahren zur Herstellung einer unverdünnten mikrobiellen Zelldispersion, umfassend:
einen primären Zerfallsschritt, bei dem Aggregate toter mikrobieller Zellen oder thermodurischer mikrobieller Zellen (thermodurische Sporen) in einzelne mikrobielle Zellen in einem wässrigen Medium durch eine mechanische Zerfallskraft zerlegt werden; einen Auflösungsschritt des Erwärmens und Rührens einer Dispersion aus Polysaccharid und mikrobiellen Zellen, die durch Dispergieren eines wässrigen gelierenden oder verdickenden Polysaccharids in der mikrobiellen Zelldispersion auf eine Temperatur, die gleich oder höher als eine Auflösungstemperatur des Polysaccharids ist, erhalten wird;
einen Abkühlschritt des Abkühlens der Dispersion aus Polysaccharid und mikrobiellen Zellen auf eine Temperatur, die gleich oder niedriger als eine wässrige Gelier- oder Verdickungstemperatur ist;
einen sekundären Zerfallsschritt, bei dem die gekühlte Dispersion aus Polysaccharid und mikrobiellen Zellen durch eine mechanische Zerfallskraft erneut zerlegt wird; und
einen Abfüllschritt des Wiedererwärmens der sekundär zerlegten Dispersion aus Polysaccharid und mikrobiellen Zellen auf eine Temperatur, bevor das wässrige gelierende oder verdickende Polysaccharid wieder aufgelöst wird, und Abfüllen der Dispersion aus Polysaccharid und mikrobiellen Zellen in einen Behälter,
wobei das gelierende oder verdickende Polysaccharid aus der Gruppe, bestehend aus Agar, Carrageen, Gellan, Pektin, Xanthan und Guarkernmehl, ausgewählt ist.

2. Verfahren zur Herstellung einer unverdünnten mikrobiellen Zelldispersion, umfassend:
einen primären Zerfallsschritt, bei dem Aggregate lebender mikrobieller Zellen in einzelne mikrobielle Zellen in einem wässrigen Medium durch eine mechanische Zerfallskraft zerlegt werden;
einen Auflösungsschritt des Erwärmens und Rührens einer Lösung, die durch Dispergieren eines wässrigen gelierenden oder verdickenden Polysaccharids in einem wässrigen Medium erhalten wird, auf eine Temperatur, die gleich oder höher als eine Auflösungstemperatur ist;
einen Abkühlschritt des Abkühlens der Polysaccharidlösung auf eine Temperatur vor einer wässrigen Gelier- oder Verdickungstemperatur;
einen sekundären Zerfallsschritt des Mischens der primär zerlegten mikrobiellen Zelldispersion und der gekühlten Polysaccharidlösung ohne Erwärmen und erneutes Zerlegen durch eine mechanische Zerfallskraft; und
einen Abfüllschritt des Abfüllens der sekundär zerlegten Dispersion aus Polysaccharid und mikrobiellen Zellen in einen Behälter bei einer Temperatur von 30°C oder weniger ohne Wiedererwärmung,
wobei das gelierende oder verdickende Polysaccharid aus der Gruppe, bestehend aus Agar, Carrageen, Gellan, Pektin, Xanthan und Guarkernmehl, ausgewählt ist.

3. Verfahren zur Herstellung einer unverdünnten mikrobiellen Zelldispersion nach Anspruch 1 oder 2, wobei das wässrige gelierende Polysaccharid Agar ist und der mikrobiellen Zelldispersion in einer Konzentration von 0,05 bis 0,5 Masse-% zugesetzt wird.

4. Verfahren zur Herstellung einer unverdünnten mikrobiellen Zelldispersion nach Anspruch 3, wobei eine wässrige Gellösungstemperatur 90°C oder höher ist und eine wässrige Geliertemperatur 30°C oder niedriger ist.

## Revendications

1. Procédé pour produire une dispersion de cellules microbiennes non diluée comportant :
une étape de désagrégation primaire consistant à disloquer des agrégats de cellules microbiennes mortes ou de cellules microbiennes thermorésistantes (spores thermorésistants) en cellules microbiennes individuelles dans un milieu aqueux par une force de désagrégation mécanique ;
une étape de dissolution consistant à chauffer et mélanger une dispersion de polysaccharide et de cellules microbiennes qui est obtenue en dispersant un polysaccharide de gélification aqueuse ou d'épaississement dans la dispersion de cellules microbiennes jusqu'à une température égale ou supérieure à la température de dissolution du polysaccharide ;
une étape de refroidissement consistant à refroidir la dispersion de polysaccharide et de cellules microbiennes jusqu'à une température égale ou inférieure à une température de gélification aqueuse ou d'épaississement;
une étape de désagrégation secondaire consistant à re-désagréger la dispersion refroidie de polysaccharide et de cellules microbiennes par une force de désagrégation mécanique ; et
une étape de remplissage consistant à réchauffer la dispersion de polysaccharide et de cellules microbiennes issue de la désagrégation secondaire jusqu'à une certaine température avant que le polysaccharide de gélification aqueuse ou d'épaississement soit redissout, et verser la dispersion de polysaccharide et de cellules microbiennes dans un récipient,
dans lequel le polysaccharide de gélification ou d'épaississement est choisi parmi le groupe constitué d'agar, de carraghénane, de gomme de gellane, de pectine, de gomme de xanthane et de gomme de guar.

2. Procédé pour produire une dispersion de cellules microbiennes non diluée comportant :
une étape de désagrégation primaire consistant à disloquer des agrégats de cellules microbiennes vivantes en cellules microbiennes individuelles dans un milieu aqueux par une force de désagrégation mécanique ;
une étape de dissolution consistant à chauffer et mélanger une solution qui est obtenue en dispersant un polysaccharide de gélification aqueuse ou d'épaississement dans un milieu aqueux jusqu'à une température égale ou supérieure à une température de dissolution ;
une étape de refroidissement consistant à refroidir la solution de polysaccharide jusqu'à une certaine température avant une température de gélification aqueuse ou d'épaississement ;
une étape de désagrégation secondaire consistant à mélanger la dispersion de cellules microbiennes issue de la désagrégation primaire et la solution de polysaccharide refroidie sans chauffer, et re-désagréger par une force de désagrégation mécanique ; et
une étape de remplissage consistant à verser la dispersion de polysaccharide et de cellules microbiennes issue de la désagrégation secondaire à une température de 30 °C ou moins sans réchauffer,
dans lequel le polysaccharide de gélification ou d'épaississement est choisi parmi le groupe constitué d'agar, de carraghénane, de gomme de gellane, de pectine, de gomme de xanthane et de gomme de guar.

3. Procédé pour produire une dispersion de cellules microbiennes non diluée selon la revendication 1 ou 2, dans lequel le polysaccharide de gélification aqueuse est l'agar, et est ajouté à la dispersion de cellules microbiennes à une concentration variant de 0,05 % à 0,5 % en masse.

4. Procédé pour produire une dispersion de cellules microbiennes non diluée selon la revendication 3, dans lequel une température de dissolution de gel aqueux est de 90 °C ou plus et une température de gélification aqueuse est de 30 °C ou moins.
